# EUROPEAN PATENT APPLICATION

(11) **EP 2 063 349 A2**
(43) Date of publication of application: **27.05.2009**
(21) Application number: 08013811.8
(22) Date of filing: 01.08.2008
(51) Int. Cl.: G06F 3/045

(54) **Touch control device and method thereof**

(30) Priority: 20.11.2007 TW 96143869
(71) Applicant: TPK Touch Solutions Inc., Taipei City 106 (TW)
(72) Inventor: Liu, Chen-Yu, Jhongli City Taoyuan County Taiwan 320 (TW); Lin, Chun-Chi, Mailiao Township Yunlin County Taiwan 638 (TW)
(74) Representative: Muttock, Neil John

(57) **Abstract**

A touch control device and a method thereof are disclosed. A driving voltage is applied to a first conductive layer (10) of the touch control device. A second conductive layer (21) is connected via scanning lines (61) to a scan sensing circuit (6). To detect the location where a touch or depression occurs, the scan sensing circuit (6) repeatedly and sequentially scans first ends (Y1a, ..., Yna) of multiple elongate conductive strips (Y1, ..., Yn) that constitute the second conductive layer (21). The coordinates of the location of the depression is determined on the basis of the scanning result that the scan sensing circuit (6) performs over the elongate conductive strips (Y1, ..., Yn) of the second conductive layer (21) and the voltage that the first conductive layer (10) applies to one or more of the elongate conductive strips (Y1, ..., Yn) of the second conductive layer (21) that correspond to the location of the depression. The second ends (Y1b, ..., Ynb) of the elongate conductive strips (Y1, ..., Yn) of the second conductive layer (21) can also be connected to the scan sensing circuit (6) via scanning lines (61a) to allow the scan sensing circuit (6) to perform scanning operation over the first and second ends (Y1a, ..., Yna; Y1b, ..., Ynb) of the elongate conductive strips (Y1, ..., Yn) of the second conductive layer (21) in a sequential and repeated manner.

## Description

### FIELD OF THE INVENTION

The present invention relates to a touch control device, and in particular to a sequentially-scanning touch control device and a method thereof.

### BACKGROUND OF THE INVENTION

A conventional touch panel includes a glass substrate having a top surface coated with a layer of transparent conductor, such as ITO conductive layer. The glass substrate and the transparent conductive layer together form a piece of electrically conductive glass panel. The electrically conductive glass panel is provided with another glass substrate or film arranged thereabove, and the another glass substrate or film is coated, on a bottom surface thereof, with a transparent conductive layer, corresponding to the transparent conductive layer of the glass panel. Insulation spacers are arranged between the transparent conductive layers of the glass panel and the film to space the transparent conductive layers.

### SUMMARY OF THE INVENTION

Various designs and constructions of touch control panels or touch control devices are available currently, each using different scanning techniques and calculations to determine the location of a touch or depression of the touch control device. However, each known technique has its own drawbacks. For example, some touch control panels require complicated circuit structure for detecting the location of the depression, and some use very complicated processes and calculation formulas to determine the location of the depression.

Thus, an objective of the present invention is to provide a touch control device, wherein a location of a depression can be easily detected and determined by a micro-controller by simply carrying out sequential scanning operation at one or both ends of one of two conductive layers of the touch control device, while maintaining a uniform electrical potential or establishing a potential gradient on the other one of the conductive layers.

Another objective of the present invention is to provide a method for detecting a location of a depression by sequentially scanning terminal ends of elongate conductive strips on a specific side or both sides of conductive layers of a touch control device, wherein sequential scanning operation is performed over the ends of the elongate conductive strips of a specific side or both sides and a micro-controller determines the location of the depression based on the voltage detected at the elongate conductive strips.

In accordance with the present invention, a solution to the above problems resides in that a driving voltage, which is a uniform electrical potential or a gradient of potential, is applied to a first conductive layer of a touch control device. A second conductive layer is connected at one end or both ends thereof, to a scan sensing circuit via scanning lines. To detect the location where a touch or depression occurs, the scan sensing circuit repeatedly and sequentially scans first ends of multiple elongate conductive strips that constitute the second conductive layer. The coordinates of the location of the depression is determined on the basis of the scanning result that the scan sensing circuit performs over the elongate conductive strips of the second conductive layer and the voltage that the first conductive layer applies to one or more of the elongate conductive strips of the second conductive layer that correspond to the location of the depression.

In accordance with the present invention, the detection of the location of the depression is carried out by performing scanning operation over one end or both end of each elongate conductive strip of a conductive layer of the touch control device and thus the control of the scanning operation and the scanning circuit required for the scanning operation are both simple. Further, in the calculation and determination of the location of the depression, the micro-controller only needs to work on simple formula for calculating voltage to detect the location of the depression on the elongate conductive strip. Compared to the known techniques, the present invention is advantageous in easy and efficient calculation and simple circuit construction.

### BRIEF DESCRIPTION OF THE DRAWINGS

The present invention will be apparent to those skilled in the art by reading the following description of preferred embodiments thereof and the best mode for carrying out the present invention, with reference to the attached drawings, in which:
Figure 1 illustrates a system block diagram of a touch control device in accordance with a first embodiment of the present invention;
Figure 2 shows a conductive layer formed on a first substrate of the touch control device opposing a second conductive layer formed on a second substrate of the touch control device when the first and second substrates are assembled together, the first and second substrates being spaced from each other by a plurality of insulation spacers;
Figure 3 shows a sequence table that a scan sensing circuit of the touch control device of the present invention takes to sequentially scan first ends of elongate conductive strips of the second conductive layer of the touch control device of the present invention;
Figure 4 shows a system block diagram of a touch control device in accordance with a second embodiment of the present invention;
Figure 5 shows a sequence table that a scan sensing circuit of the touch control device of the present invention takes to sequentially scan first and second ends of elongate conductive strips of a second conductive layer of the touch control device in accordance with the second embodiment of the present invention;
Figure 6 shows a system block diagram of a touch control device in accordance with a third embodiment of the present invention;
Figure 7 shows a potential gradient established in a first conductive layer of the touch control device in accordance with the third embodiment illustrated in Figure 6;
Figure 8 shows a system block diagram of a touch control device in accordance with a fourth embodiment of the present invention;
Figure 9 shows a system block diagram of a touch control device in accordance with a fifth embodiment of the present invention;
Figure 10 shows the spatial relationship of a first conductive layer formed on a first substrate of the touch control device in accordance with the fifth embodiment illustrated in Figure 9 with respect to a second conductive layer formed on a second substrate when the first and second substrates are assembled together;
Figure 11 shows a system block diagram of a touch control device in accordance with a sixth embodiment of the present invention;
Figure 12 shows a system block diagram of a touch control device in accordance with a seventh embodiment of the present invention
Figure 13 shows a potential gradient established in a first conductive layer of the touch control device in accordance with the seventh embodiment illustrated in Figure 12; and
Figure 14 shows a system block diagram of a touch control device in accordance with an eighth embodiment of the present invention.

### DETAILED DESCRIPTION OF THE PREFERRED EMBODIMENTS

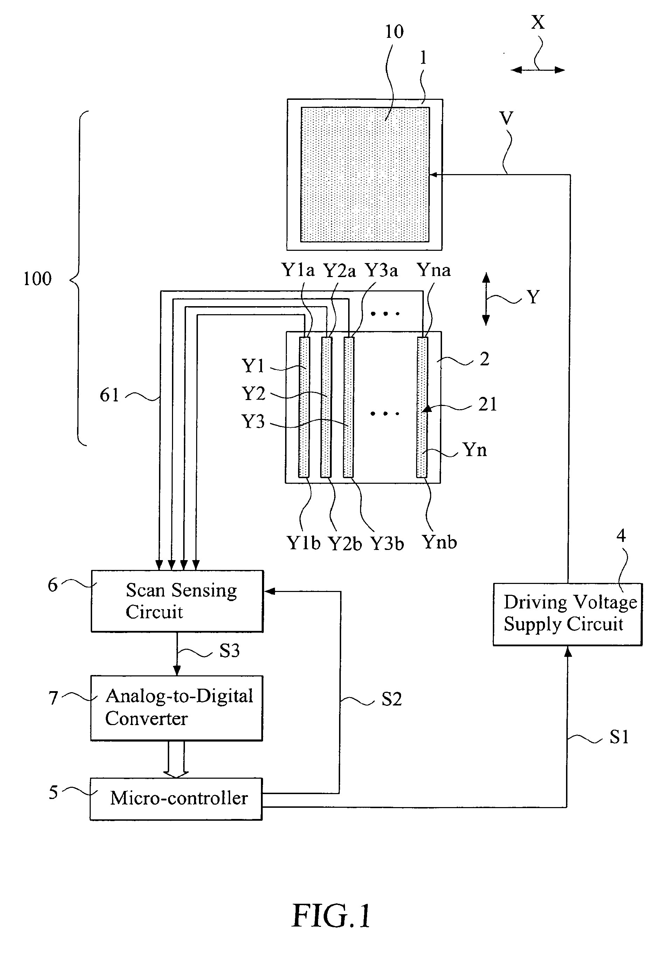

With reference to the drawings and in particular to Figure 1, which illustrates a system block diagram of a touch control device in accordance with a first embodiment of the present invention, the touch control device, which is generally designated at 100, comprises a first substrate 1 and a second, opposite substrate 2. The first substrate 1 has a bottom surface on which a first conductive layer 10 is formed in a continuous planar structure. The second substrate 2 has a top surface on which a second conductive layer 21 is formed. For the state-of-art technology of touch control panels, it is often to coat a layer of transparent conductor, such as ITO conductive layer, on a surface of a glass substrate to serve as both the continuous planar structure of the first conductive layer 10 and the second conductive layer 21.

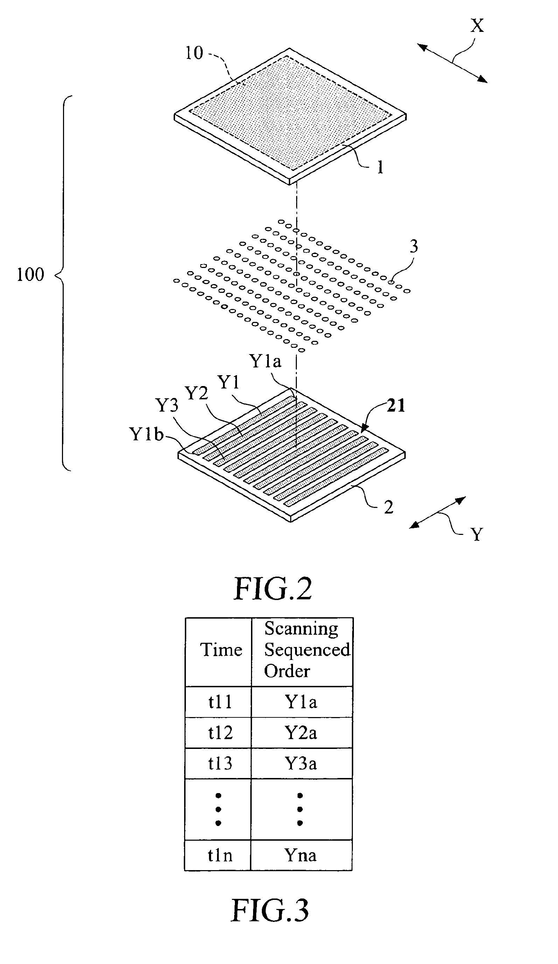

Figure 2 shows the continuous planar structure of the first conductive layer 10 opposing the second conductive layer 2 when the first and second substrates 1, 2 are assembled together. The first and second substrates 1, 2 are spaced from each other by a plurality of insulation spacer 3.

The continuous planar structure of the first conductive layer 10 is formed by uniformly coating a transparent conductive layer on the bottom surface of the first substrate 1 and a driving voltage V of a preset voltage level is applied from a driving voltage supply circuit 4 to the continuous planar structure of the first conductive layer 10 to thereby establish a uniform electric potential on the continuous planar structure of the first conductive layer 10.

The second conductive layer 21 is comprised of a plurality of elongate conductive strips Y1, Y2, Y3, ..., Yn, which are electrically insulated and substantially parallel to each other. Each elongate conductive strip Y1, Y2, Y3, ..., Yn is extended in a first direction Y on the top surface of the second substrate 2.

Each elongate conductive strip Y1, Y2, Y3, ..., Yn of the second conductive layer 2 has a first end Y1a, Y2a, Y3a, ..., Yna, which is connected to a scan sensing circuit 6 by scanning lines 61, an example being a conventional multiplexer. Each elongate conductive strip Y1, Y2, Y3, ..., Yn of the second conductive layer 2 also has a second end Y1b, Y2b, Y3b, ..., Ynb, which is set in an open condition. A micro-controller 5 controls, via a scan control signal S2, the scan sensing circuit 6 to carry out sequential scanning over the first end Y1a, Y2a, Y3a, ..., Yna of the elongate conductive strips Y1, Y2, Y3, ..., Yn to detect physical engagement of any one of the elongate conductive strips Y1, Y2, Y3, ..., Yn with the continuous planar structure of the first conductive layer 10, as being physically depressed or actuated, and the location or the actuation/depression.

Figure 3 shows a sequence table that the scan sensing circuit 6 takes to sequentially scan the first ends Y1a, Y2a, Y3a, ..., Yna of the elongate conductive strips Y1, Y2, Y3, ..., Yn. At the first time point t11, the scan sensing circuit 6 first carries out scanning over the first end Y1a of the elongate conductive strip Y1. Then, at the second time point t12, the first end Y2a of the elongate conductive strip Y2 is scanned, and at the third time point t13, the first end Y3a of the elongate conductive strip Y3 is scanned. The scanning operation is repeated in sequence for each of the elongate conductive strips and finally, at the nth time point t1n, the first end Yna of the elongate conductive strip Yn is scanned. Once the cycle of scanning is completed, the previous process is repeated again for sequentially scanning the ends of the elongate conductive strips Y1, Y2, Y3, ..., Yn.

The scanning operation that the scan sensing circuit 6 performs over the elongate conductive strips Y1, Y2, Y3, ..., Yn of the second conductive layer 21 provides a scan sensing signal S3, which is converted by an analog-to-digital converter 7 into a digital scan sensing signal, and the digital scan sensing signal is applied to the micro-controller 5.

When the surface of the first substrate 1 is depressed, the continuous planar structure of the first conductive layer 1 is forced to engage the second conductive layer 21 at the location or point where the depression occurs. Thus, according to the location of the depression, the continuous planar structure of the first conductive layer 10 applies the driving voltage V to the elongate conductive strips Y1, Y2, Y3, ..., Yn of the second conductive layer 21 that correspond to the location of the depression. The micro-controller 5 bases on the scan sensing signal S3 that is generated by the scanning operation carried out on the elongated conductive strips Y1, Y2, Y3, ..., Yn of the second conductive layer 2 by the scan sensing circuit 6 to calculate and determine the coordinates of X and Y axes of the location of the depression.

For example, when a user touches and depresses down the continuous planar structure of the first conductive layer 10 to cause engagement with the third elongate conductive strip Y3 of the second conductive layer 21, the driving voltage V that is present on the continuous planar structure of the first conductive layer 10 is applied to the third elongate conductive strip Y3 of the second conductive layer 21.

When the scan sensing circuit 6 scans over the third elongate conductive strip Y3 of the second conductive layer 21, it can be determined that the location of the depression by the user is on the third elongate conductive strip Y3. Then the micro-controller 5 bases on the voltage that is caused by the driving voltage V and is detected at the first end Y3a of the third elongate conductive strip Y3 to calculate and determine the X, Y coordinates of the location of the depression by the user.

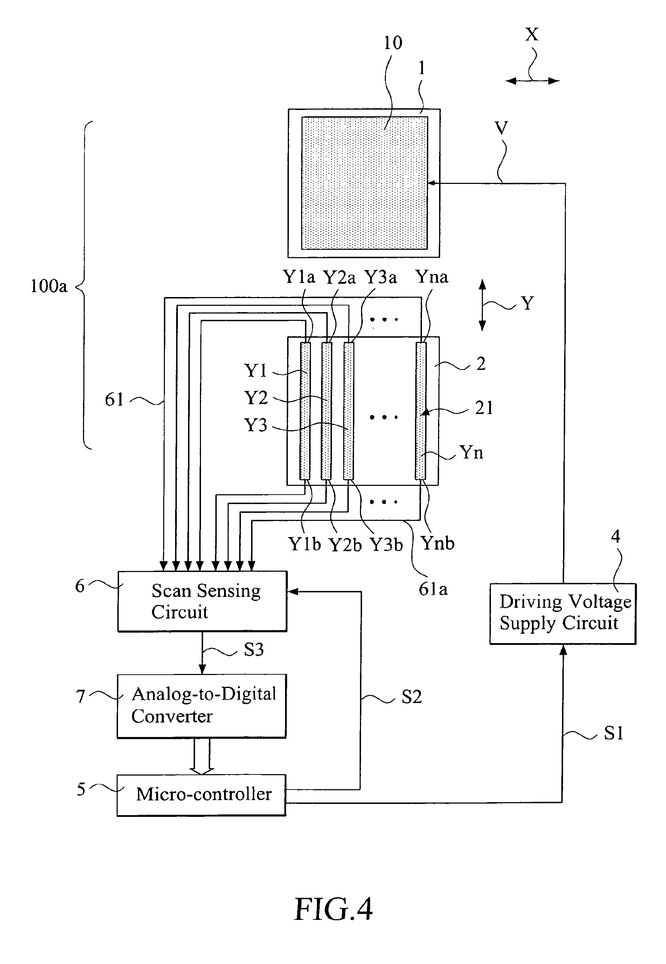

Figure 4 shows a system block diagram of a touch control device 100a in accordance with a second embodiment of the present invention. The second embodiment (touch control device 100a) is substantially identical to the first embodiment (touch control device 100) with the exception that besides the first ends Y1a, Y2a, Y3a, ..., Yna of the elongate conductive strips Y1, Y2, Y3, ..., Yn of the second conductive layer 21 being connected to the scan sensing circuit 6 via the scanning lines 61, the elongate conductive strips Y1, Y2, Y3, ..., Yn also have second ends Y1b, Y2b, Y3b, ..., Ynb that are connected to the scan sensing circuit 6 by other scanning lines 61 a. Thus, the scan sensing circuit 6 can carry out scanning operation, in a sequential manner, over the first ends Y1a, Y2a, Y3a, ... , Yna and the second ends Y1b, Y2b, Y3b, ... , Ynb of the elongate conductive strips Y1, Y2, Y3, ..., Yn, respectively via the scanning lines 61, 61a, in order to detect the engagement of the elongate conductive strips Y1, Y2, Y3, ..., Yn with respect to the continuous planar structure of the first conductive layer 10 due to being touched and depressed, as well as the location of the depression.

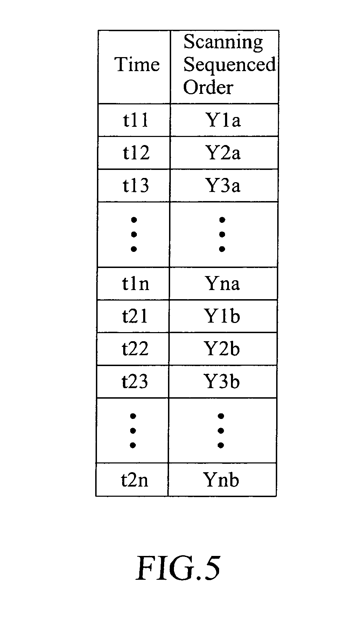

Figure 5 shows a sequence table that the scan sensing circuit 6 takes to sequentially scan the first ends Y1a, Y2a, Y3a, ..., Yna and the second ends Y1b, Y2b, Y3b, ... , Ynb of the elongate conductive strips Y1, Y2, Y3, ... , Yn. The scan sensing circuit 6 carries out scanning operation over the first ends Y1a, Y2a, Y3a, ..., Yna of the elongate conductive strips Y1, Y2, Y3, ..., Yn in sequence at different time points t11, t12, t13, ..., t1n, and then sequentially scans the second ends Y1b, Y2b, Y3b, ..., Ynb of the elongate conductive strips Y1, Y2, Y3, ..., Yn at different time points t21, t22, t23, ..., t2n. Once a cycle of scanning operation over the ends of the elongate conductive strips is completed, the whole scanning operation is repeated to once again sequentially scanning the first and second ends of the elongate conductive strips Y1, Y2, Y3, ..., Yn.

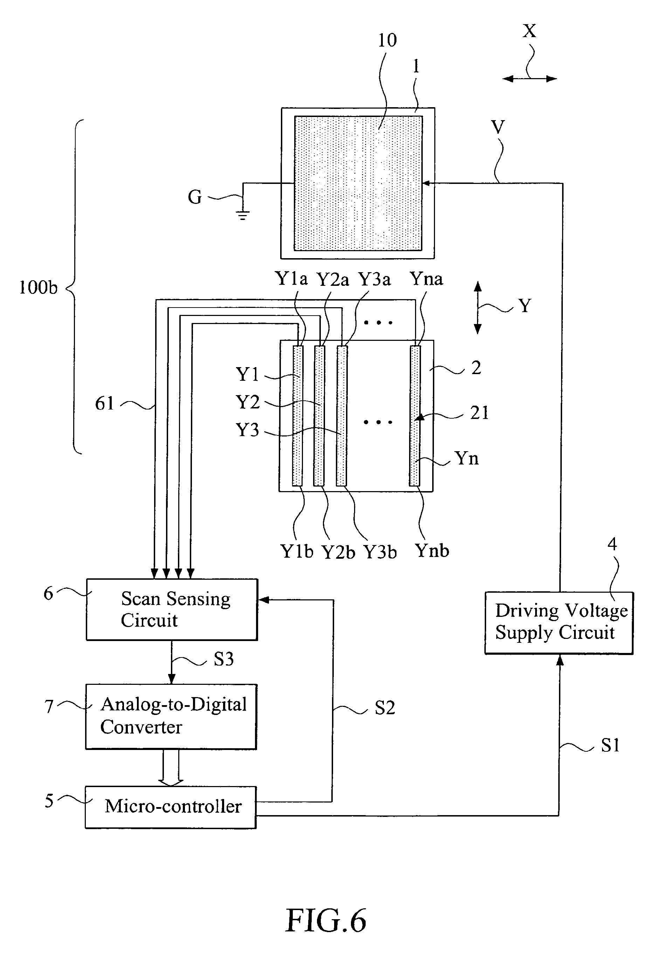

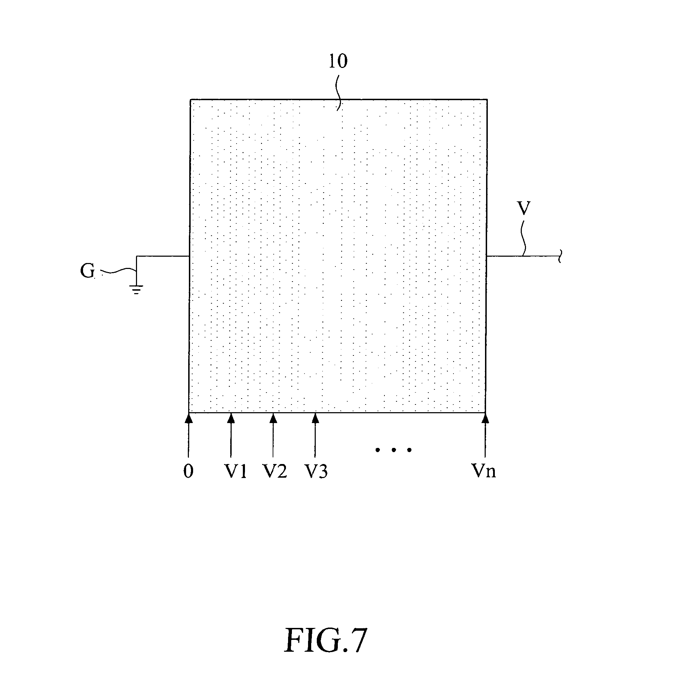

Figure 6 shows a system block diagram of a touch control device 100b in accordance with a third embodiment of the present invention. The third embodiment (touch control device 100b) is substantially identical to the first embodiment (touch control device 100) and the difference between the two embodiments resides in that in the touch control device 100b of the third embodiment, the driving voltage V of a preset voltage level is applied to an end of the continuous planar structure of the first conductive layer 10 and an opposite end of the continuous planar structure of the first conductive layer 10 is grounded via a grounding line G, whereby a potential gradient is established on the continuous planar structure of the first conductive layer 10, as illustrated in Figure 7.

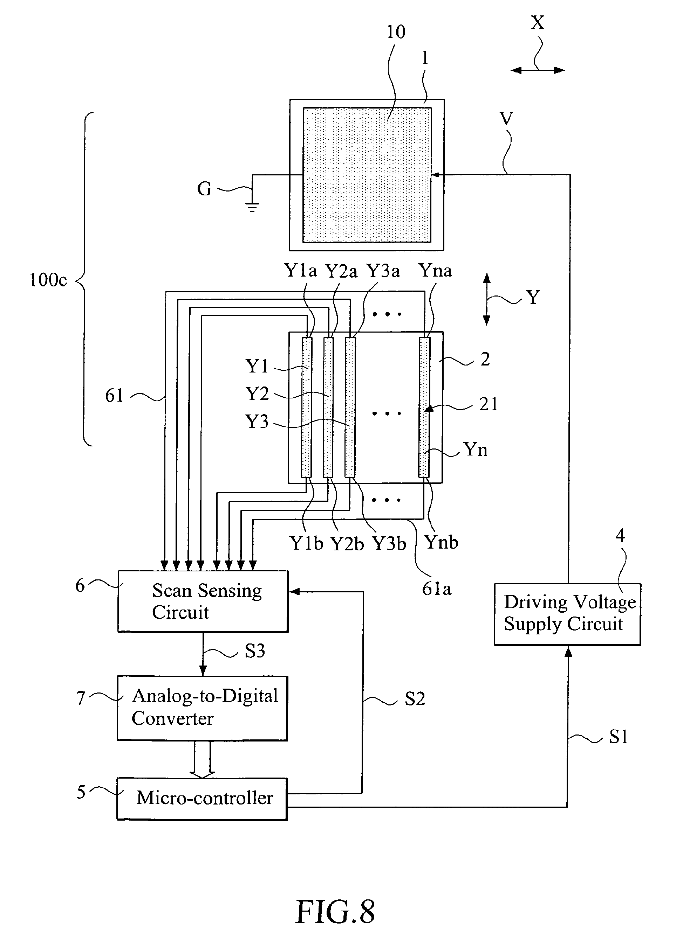

Figure 8 shows a system block diagram of a touch control device 100c in accordance with a fourth embodiment of the present invention. The fourth embodiment (touch control device 100c) is substantially identical to the second embodiment (touch control device 100a) illustrated in Figure 4 and the difference between the two embodiments resides in that in the touch control device 100c of the fourth embodiment, the driving voltage V of a preset voltage level is applied to an end of the continuous planar structure of the first conductive layer 10 and an opposite end of the continuous planar structure of the first conductive layer 10 is grounded via a grounding line G, whereby a potential gradient is established on the continuous planar structure of the first conductive layer 10.

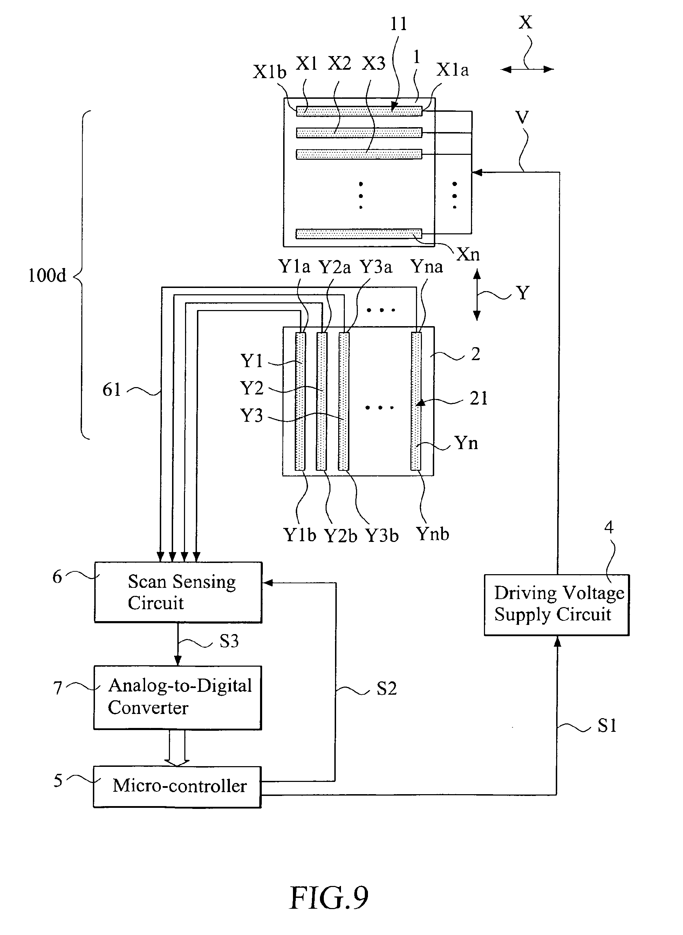

Figure 9 shows a system block diagram of a touch control device 100d in accordance with a fifth embodiment of the present invention. The fifth embodiment (touch control device 100d) is substantially identical to the first embodiment (touch control device 100) illustrated in Figure 1 and the difference between the two embodiments resides in that in the touch control device 100d of the fifth embodiment, the continuous planar structure of the first conductive layer 10 of the touch control device 100 of the first embodiment is replaced by a first conductive layer 11 having a structure composed of elongated conductive strips. The first conductive layer 11 comprises a plurality of elongate conductive strips X1, X2, X3, ..., Xn that together is equivalent to the continuous planar structure adopted in the previous embodiments. The elongate conductive strips X1, X2, X3, ..., Xn are electrically insulated and substantially parallel to each other. Each of the elongate conductive strips X1, X2, X3, ..., Xn extends in a second direction X on the bottom surface of the first substrate 1 and each elongate conductive strip X1, X2, X3, ..., Xn has opposite first and second ends. For example, the ends of the elongate conductive strip X1 are first end X1a and second end X1b.

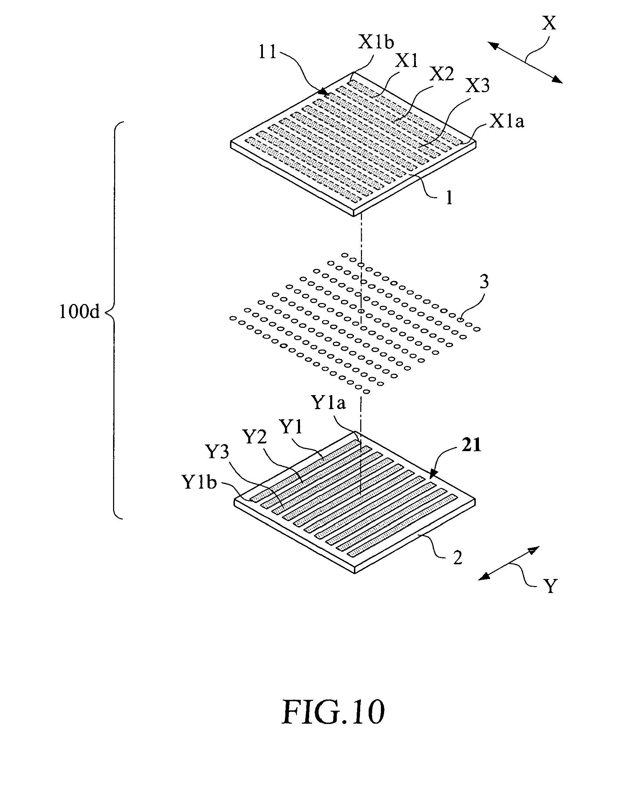

Figure 10 illustrates the spatial relationship of the first conductive layer 11 with respect to the second conductive layer 21 when the first and second substrates 1, 2 shown in Figure 9 are assembled together. The first and second substrates 1, 2 are spaced from each other by insulation spacer 3.

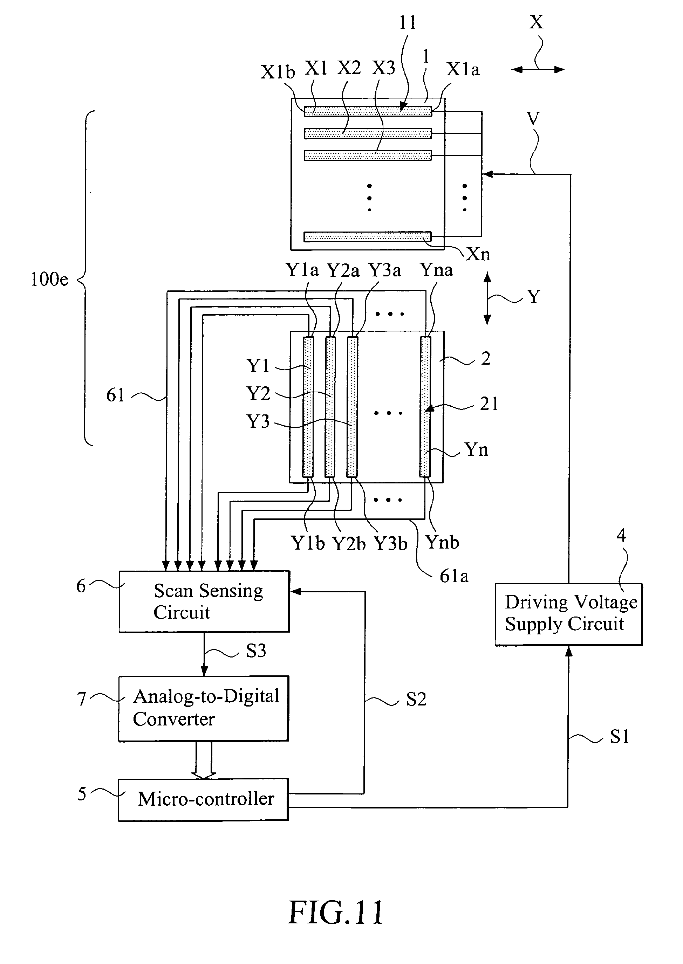

Figure 11 shows a system block diagram of a touch control device 100e in accordance with a sixth embodiment of the present invention. The sixth embodiment (touch control device 100e) is substantially identical to the fifth embodiment (touch control device 100d) illustrated in Figure 9 and the difference between the two embodiments resides in that besides the first ends Y1a, Y2a, Y3a, ..., Yna of the elongate conductive strips Y1, Y2, Y3, ..., Yn of the second conductive layer 21 being connected to the scan sensing circuit 6 via the scanning lines 61, the elongate conductive strips Y1, Y2, Y3, ..., Yn also have second ends Y1b, Y2b, Y3b, ..., Ynb that are connected to the scan sensing circuit 6 by other scanning lines 61 a. Thus, the scan sensing circuit 6 can carry out scanning operation, in a sequential manner, over the first ends Y1a, Y2a, Y3a, ..., Yna and the second ends Y1b, Y2b, Y3b, ..., Ynb of the elongate conductive strips Y1, Y2, Y3, ..., Yn, respectively via the scanning lines 61, 61a, in order to detect the engagement of the elongate conductive strips Y1, Y2, Y3, ..., Yn with respect to the continuous planar structure of the first conductive layer 10 due to being touched and depressed, as well as the location of the depression.

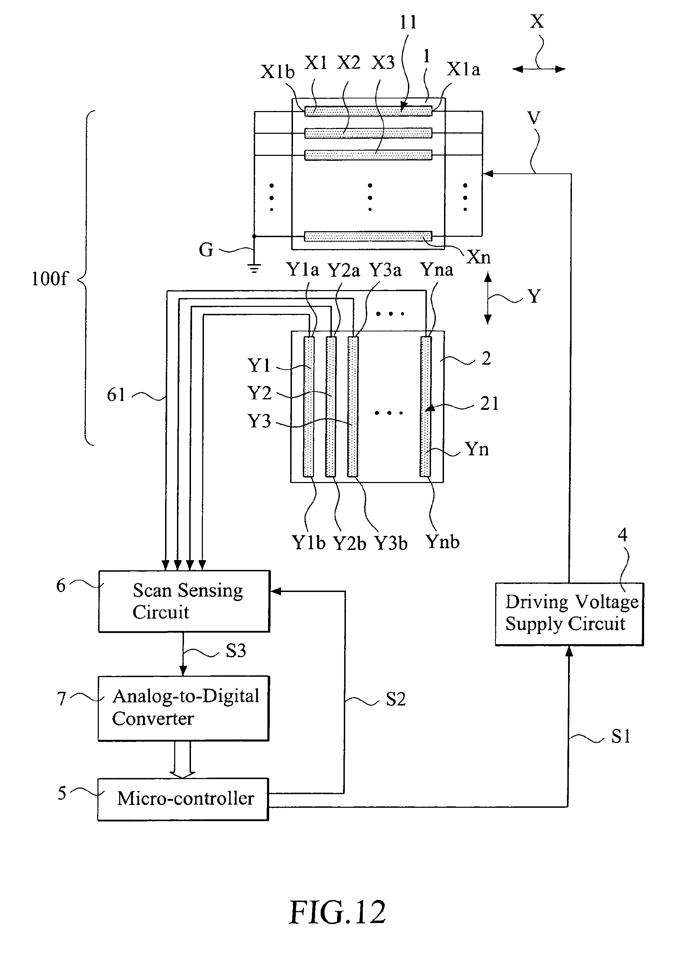

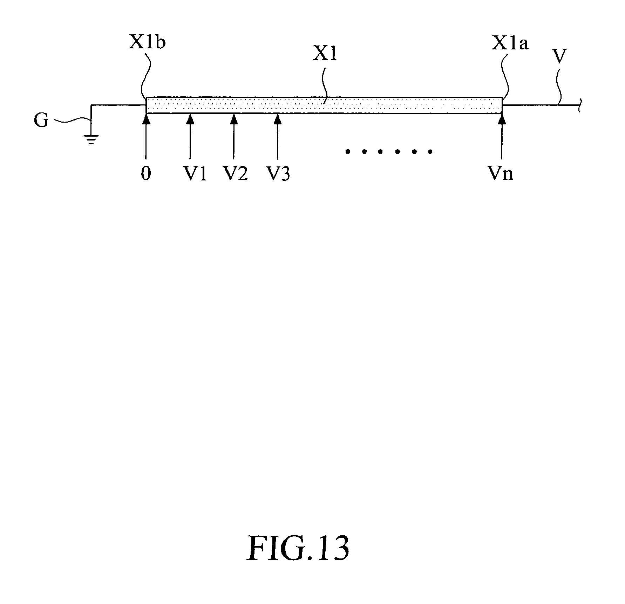

Figure 12 shows a system block diagram of a touch control device 100f in accordance with a seventh embodiment of the present invention. The seventh embodiment (touch control device 100f) is substantially identical to the fifth embodiment (touch control device 100d) illustrated in Figure 9 and the difference between the two embodiments resides in that in the touch control device 100f of the seventh embodiment, the driving voltage V of a preset voltage level is applied to the first end X1a, X2a, X3a, ..., Xna of each elongate conductive strip X1, X2, X3, ..., Xn and the second end X1b, X2b, X3b, ..., Xnb of the elongate conductive strip is grounded via a grounding line G, whereby a potential gradient is established on each elongate conductive strip X1, X2, X3, ..., Xn, as illustrated in Figure 13.

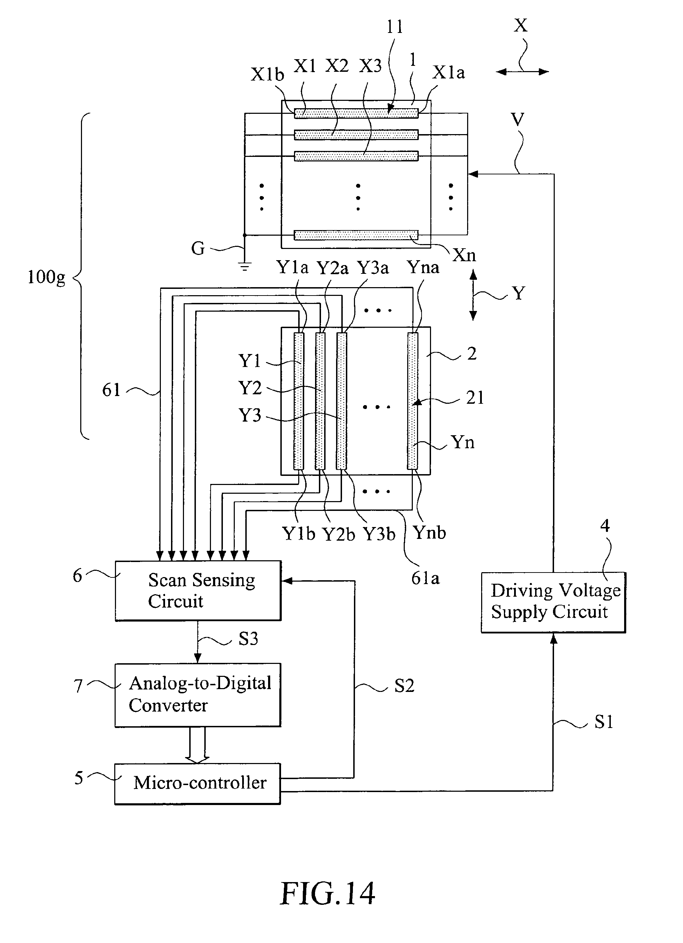

Figure 14 shows a system block diagram of a touch control device 100g in accordance with an eighth embodiment of the present invention. The eighth embodiment (touch control device 100g) is substantially identical to the seventh embodiment (touch control device 100f) illustrated in Figure 12 and the difference between the two embodiments resides in that besides the first ends Y1a, Y2a, Y3a, ..., Yna of the elongate conductive strips Y1, Y2, Y3, ..., Yn of the second conductive layer 21 being connected to the scan sensing circuit 6 via the scanning lines 61, the elongate conductive strips Y1, Y2, Y3, ..., Yn also have second ends Y1b, Y2b, Y3b, ..., Ynb that are connected to the scan sensing circuit 6 by other scanning lines 61a. Thus, the scan sensing circuit 6 can carry out scanning operation, in a sequential manner, over the first ends Y1a, Y2a, Y3a, ..., Yna and the second ends Y1b, Y2b, Y3b, ..., Ynb of the elongate conductive strips Y1, Y2, Y3, ..., Yn, respectively via the scanning lines 61, 61a, in order to detect the engagement of the elongate conductive strips Y1, Y2, Y3, ..., Yn with respect to the elongate-strip structure of the first conductive layer 11 due to being touched and depressed, as well as the location of the depression.

## Claims

1. A touch control device (100, 100a, 100b, 100c, 100d, 100e, 100f, 100g), comprising:
a first substrate (1) forming a first conductive layer (10) to which a driving voltage is applied;
a second substrate (2) forming a second conductive layer (21), which comprises a plurality of elongate conductive strips (Y1, ..., Yn) that are electrically insulated and substantially parallel to each other, the elongate conductive strips (Y1, ..., Yn) extending in a first direction and having opposite first and second ends (Y1a, ..., Yna; Y1b, ..., Ynb), the first substrate (1) and the second substrate (2) being spaced from each other by a plurality of insulation spacers (3);
a scan sensing circuit (6) connected to the first ends (Y1a, ..., Yna) of the elongate conductive strips (Y1, ..., Yn) of the second conductive layers (21) via a plurality of scanning lines (61) respectively; and
a micro-controller (5) connected to the scan sensing circuit (6);
**characterized in that** a depression applied at the first substrate (1) causes the first and second conductive layers (10; 21) to engage each other at a location of the depression and **characterized in that** the first conductive layer (10) applies the driving voltage to one of the elongate conductive strips (Y1, ..., Yn) corresponding to the location of the depression so that the micro-controller (5) calculates and determines the location of the depression based on a result of a scanning operation that is sequentially performed over the first ends (Y1a, ..., Yna) of the elongate conductive strips (Y1, ..., Yn) by the scan sensing circuit (6).

2. The touch control device (100, 100a, 100d, 100e) as claimed in Claim 1,
**characterized in that** the driving voltage applied to the first conductive layer (10) of the first substrate (1) forms a uniform electrical potential on the first conductive layer (10).

3. The touch control device (100b, 100f, 100g) as claimed in Claim 1, **characterized in that** the driving voltage applied to the first conductive layer (10) of the first substrate (1) forms a potential gradient on the first conductive layer (10).

4. The touch control device (100, 100a, 100b, 100c) as claimed in Claim 1, **characterized in that** the first conductive layer (10) of the first substrate (1) forms a continuous planar structure.

5. The touch control device (100d, 100e, 100f, 100g) as claimed in Claim 1, **characterized in that** the first conductive layer (10) of the first substrate (1) comprises a plurality of elongate conductive strips (X1a, ..., Xna).

6. The touch control device (100a, 100c, 100e, 100g) as claimed in Claim 1, **characterized in that** the second ends (Y1b, ..., Ynb) of the elongate conductive strips (Y1, ..., Yn) of the second conductive layer (21) are connected to the scan sensing circuit (6) via scanning lines (61a)respectively.

7. The touch control device (100, 100b, 100d, 100f) as claimed in Claim 1, **characterized in that** the second ends (Y1b, ..., Ynb) of the elongate conductive strips (Y1, ..., Yn) of the second conductive layer (21) are open.

8. A method for detecting touch in a touch control device that comprises a first substrate (1) forming a first conductive layer (10), a second substrate (2) forming a second conductive layer (21) comprised of a plurality of elongate conductive strips (Y1, ..., Yn) that are electrically insulated and substantially parallel to each other and extend in a first direction to form opposite first and second ends (Y1a, ..., Yna; Y1b, ..., Ynb), the first and second substrates (1; 2) being spaced from each other by a plurality of insulation spacers (3), and a scan sensing circuit (6) connected to the first ends (Y1a, ..., Yna) of the elongate conductive strips (Y1, ..., Yn) of the second conductive layer (21) via a plurality of scanning lines (61) respectively, the method comprising the following steps;
(a) applying a driving voltage to the first conductive layer (10);
(b) applying a touch and thus inducing a depression on the first substrate (1) to have the first and second substrates (1; 2) engaging each other at a location of the depression and to cause the first conductive layer (10) to apply the driving voltage to one of the elongate conductive strips (Y1, ..., Yn) of the second conductive layer (21) that corresponds to the location of the depression;
(c) repeatedly and sequentially scanning the elongate conductive strips (Y1, ..., Yn) of the second conductive layer (21) via the scanning lines (61) by means of the scan sensing circuit (6) to obtain a scanning result; and
(d) calculating coordinates of the location of the depression based on the scanning result that the scan sensing circuit (6) performs over the elongate conductive strips (Y1, ..., Yn) of the second conductive layer (21) and voltage that the first conductive layer (10) applies to the one of the elongate conductive strips (Y1, ..., Yn) of the second conductive layer (21) corresponding to the location of the depression caused by the touch applied to the first substrate (1).

9. The method as claimed in Claim 8, **characterized in that** in step (a), the driving voltage applied to the first conductive layer (10) of the first substrate (1) forms a uniform electrical potential on the first conductive layer (10).

10. The method as claimed in Claim 8, **characterized in that** in step (a), the driving voltage applied to the first conductive layer (10) of the first substrate forms a potential gradient on the first conductive layer (10).

11. The method as claimed in Claim 8, **characterized in that** in step (c), the scanning is sequentially performed over the first ends (Y1a, ..., Yna) of the elongate conductive strips (Y1, ..., Yn) of the second conductive layer (21) by the scan sensing circuit (6).

12. The method as claimed in Claim 11 further comprising carrying out scanning in sequence over the second ends (Y1b, ..., Ynb) of the elongate conductive strips (Y1, ..., Yn) of the second conductive layer (21) after the scanning performed over the first ends (Y1a, ..., Yna) of the elongate conductive strips (Y1, ..., Yn) in step (c).
